# EUROPEAN PATENT APPLICATION

(11) **EP 3 934 121 A1**
(43) Date of publication of application: **05.01.2022**
(21) Application number: 19916608.3
(22) Date of filing: 25.02.2019
(51) Int. Cl.: H04B 7/0456, H04B 7/06

(54) **USER TERMINAL AND WIRELESS COMMUNICATION METHOD**

(71) Applicant: NTT DOCOMO, INC., Chiyoda-ku Tokyo 100-6150 (JP)
(72) Inventor: OKAMURA, Masaya, Tokyo 100-6150 (JP); MATSUMURA, Yuki, Tokyo 100-6150 (JP); HARADA, Hiroki, Tokyo 100-6150 (JP)
(74) Representative: Hoffmann Eitle
(86) International application number: PCT/JP2019/007119
(87) International publication number: WO 2020/174545

(57) **Abstract**

A user terminal according to an aspect of the present disclosure includes a control section that determines, on the basis of downlink control information, a precoding matrix applied to a physical uplink shared channel (PUSCH), and a transmitting section that judges, on the basis of the precoding matrix, whether or not to apply antenna switching for a signal or a channel other than the PUSCH, and transmits the signal or the channel other than the PUSCH. According to one aspect of the present disclosure, it is possible to appropriately control full power transmission.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### SUMMARY OF INVENTION

### Technical Problem

For future radio communication systems (e.g., NR), supporting codebook-based transmission using a precoding matrix is under study.

However, in conventional Rel-15 NR specifications, when a UE performs the codebook-based transmission using a plurality of ports, using some codebooks may lower transmit power as compared to the codebook-based transmission using a single port (full power transmission is not available). For example, when a power amplifier (PA) connected to some antenna ports is not a PA (full rated PA) that can output maximum rated power, full power transmission may not be available. When full power transmission is not available, coverage reduction may occur, and an increase in communication throughput may be suppressed.

Thus, an object of the present disclosure is to provide a user terminal and a radio communication method that can appropriately control full power transmission.

### Solution to Problem

A user terminal according to an aspect of the present disclosure includes a control section that determines, on the basis of downlink control information, a precoding matrix applied to a physical uplink shared channel (PUSCH), and a transmitting section that judges, on the basis of the precoding matrix, whether or not to apply antenna switching for a signal or a channel other than the PUSCH, and transmits the signal or the channel other than the PUSCH.

### Advantageous Effects of Invention

According to one aspect of the present disclosure, it is possible to appropriately control full power transmission.

### Brief Description of Drawings

FIG. 1 is a diagram to show an example of an association between a precoder type and a TPMI index;
FIG. 2 is a diagram to show an example of a structure of a UE assumed by UE capabilities 1 to 3 that are associated with full power transmission;
FIGS. 3A and 3B are diagrams to show an example of UE capability information regarding support for a full rated PA in a first embodiment;
FIG. 4 is a diagram to show an example of PA switching in a second embodiment;
FIGS. 5A to 5C are diagrams to show an example of antenna switching control based on a time until PUSCH transmission;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

### (PUSCH Precoder)

For NR, supporting at least one of codebook-based (CB-based) transmission and non-codebook-based (NCB-based) transmission by a UE is under study.

For example, judging a precoder (precoding matrix) for at least one of CB-based or NCB-based uplink shared channel (Physical Uplink Shared Channel (PUSCH)) transmission by using at least a sounding reference signal (SRS) resource index (SRI) by the UE is under study.

When performing CB-based transmission, the UE may determine the precoder for PUSCH transmission on the basis of the SRI, a transmitted rank indicator (TRI), a transmitted precoding matrix indicator (TPMI), and the like. When performing NCB-based transmission, the UE may determine the precoder for PUSCH transmission on the basis of the SRI.

The SRI, the TRI, the TPMI, and the like may be notified to the UE by using downlink control information (DCI). The SRI may be designated by an SRS Resource Indicator field (SRI field) in the DCI, or may be designated by a parameter "srs-ResourceIndicator" that is included in an RRC information element "ConfiguredGrantConfig" for a configured grant PUSCH. The TRI and the TPMI may be designated by a Precoding information and number of layers field in the DCI.

The UE may report UE capability information regarding a precoder type, and a precoder type based on the UE capability information may be configured for the UE by higher layer signaling from a base station. The UE capability information may be precoder type information (that may be indicated by an RRC parameter "pusch-TransCoherence") used by the UE for PUSCH transmission.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information blocks (SIB), or the like.

The UE may determine the precoder used for PUSCH transmission on the basis of precoder type information (that may be indicated by an RRC parameter "codebookSubset") that is included in PUSCH configuration information ("PUSCH-Config" information element for RRC signaling) notified by the higher layer signaling. A subset of PMIs designated by the TPMI may be configured for the UE by the codebookSubset.

Note that the precoder type may be designated by any one or combinations (for example, that may be expressed by a parameter such as fully, partial, and non-coherent (fullyAndPartialAndNonCoherent) partial and non-coherent (partialAndNonCoherent) or the like) of at least two of fully coherent (full coherent, coherent), partial coherent, and non-coherent (non coherent).

The fully coherent may mean that antenna ports used for transmission are synchronized (which may be expressed as it is possible to achieve phase matching, the same precoder is to be applied, or the like. The partial coherent may mean that some of antenna ports to be used for transmission are synchronized but others are not synchronized. The non-coherent may mean that antenna ports to be used for transmission are not synchronized.

Note that the UE that supports the fully coherent precoder type may be assumed to support the partial coherent and non-coherent precoder types. Note that the UE that supports the partial coherent precoder type may be assumed to support the non-coherent precoder type.

The precoder type may be interpreted as coherency, PUSCH transmission coherence, a coherent type, a coherence type, a codebook type, a codebook subset, a codebook subset type, and the like.

The UE may determine a precoding matrix (codebook) corresponding to a TPMI index obtained by DCI that schedules UL transmission in accordance with a plurality of precoders (precoding matrices) for CB-based transmission.

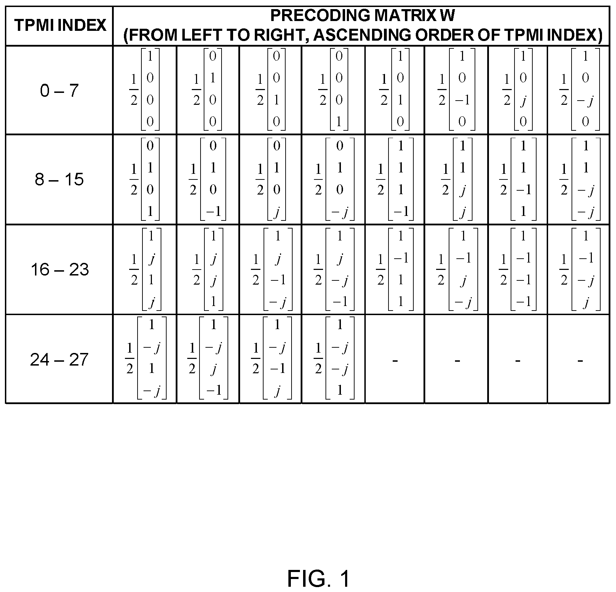

FIG. 1 is a diagram to show an example of an association between the precoder type and the TPMI index. FIG. 1 corresponds to a table for a precoding matrix W for single layer transmission using 4 antenna ports in DFT-s-OFDM (Discrete Fourier Transform spread OFDM, transform precoding is enabled).

In FIG. 1, when a precoder type (codebookSubset) is fully and partial and non-coherent (fullyAndPartialAndNonCoherent), any one of TPMIs 0 to 27 is notified to the UE regarding single layer transmission. When the precoder type is partial and non-coherent (PartialAndNonCoherent), any one of TPMIs 0 to 11 is notified to the UE regarding single layer transmission. When the precoder type is non-coherent (nonCoherent), any one of TPMIs 0 to 3 is notified to the UE regarding single layer transmission.

FIG. 1 is a table that is defined in current Rel-15 NR. In this table, letting a fully coherent transmit power corresponding to indices 12 to 27 be 1 (= (1/2)² * 4), a partially coherent transmit power corresponding to indices 4 to 11 is 1/2 (= (1/2)² * 2), and a non-coherent transmit power corresponding to indices 0 to 3 is 1/4 (= (1/2)² * 1).

In other words, according to the current Rel-15 NR specifications, when the UE performs codebook-based transmission by using a plurality of ports, using some codebooks may a lower transmit power as compared to the codebook-based transmission using a single port (full power transmission is not available).

### (UE Capability for Full Power Transmission)

Performing full power UL transmission appropriately is preferable even when a codebook is used. Thus, for NR, UE capabilities associated with codebook-based full power UL transmission using a plurality of power amplifiers (PAs) are under study. In discussions of NR thus far, UE capabilities 1 to 3 have been proposed as follows:
UE capability 1: a PA (full rated PA) that can output maximum rated power is supported (or included) in respective transmission chains (Tx chains),
UE capability 2: none of the transmission chains support the full rated PA, and
UE capability 3: a subset (part) of the transmission chains supports the full rated PA.

Note that the UE that has UE capabilities 1 to 3 may mean that the UE supports full power for UL transmission.

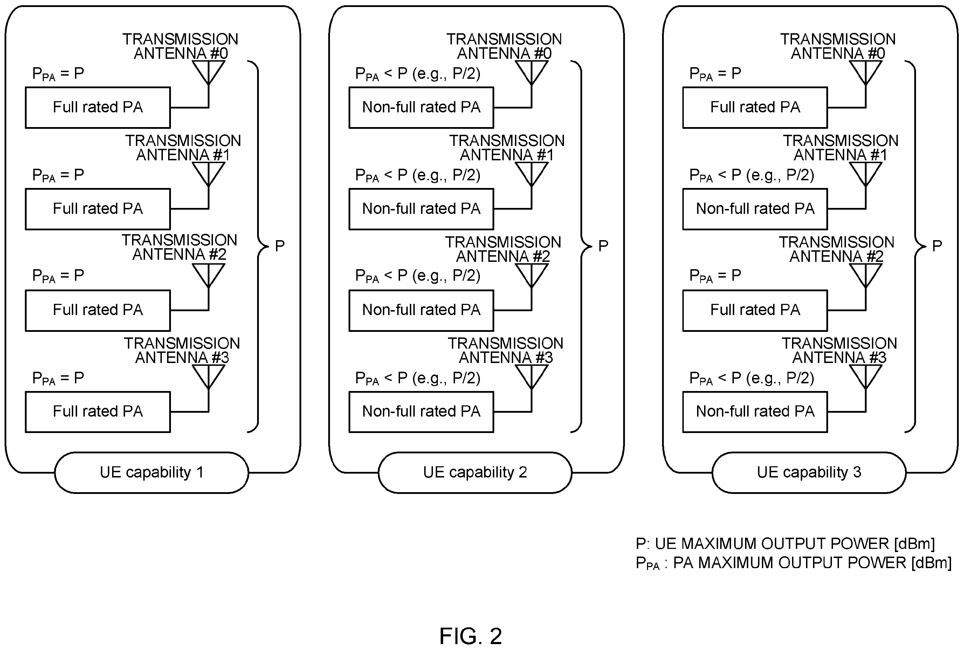

FIG. 2 is a diagram to show an example of a structure of the UE assumed by UE capabilities 1 to 3 that are associated with full power transmission. FIG. 2 briefly shows only PAs and transmission antenna ports (that may be interpreted as transmission antennas) as the structure of the UE. Although FIG. 2 shows an example in which both the number of the PAs and the number of the transmission antenna ports are 4, these number is not limited to this.

Note that in subsequent diagrams, P denotes a UE maximum output power [dBm], and P*_{PA}* denotes a PA maximum output power [dBm]. Note that P may be, for example, 23 dBm in a power class 3 UE. Although the present disclosure assumes P*_{PA}* ≤ P, embodiments according to the present disclosure may be employed when P*_{PA}* > P.

Although a structure of UE capability 1 is assumed to be higher in cost of implementation, the structure can perform full power transmission using one or more arbitrary antenna ports. Although a structure of UE capability 2 includes only non-full rated PAs and is expected to be implementable at a lower cost, the structure cannot perform full power transmission using only one antenna port, and thus controlling of a phase, amplitude, and the like of a signal that is input into each PA is needed.

A structure of UE capability 3 is in the middle of the structure of UE capability 1 and the structure of UE capability 2. Antenna ports (in the present example, transmission antennas #0 and #2) that can perform full power transmission coexist with antenna ports (in the present example, transmission antennas #1 and #3) that cannot perform full power transmission.

Note that an index, the number, and the like of the antenna ports of UE capability 3 that can perform full power transmission are not limited to this. Although the present example assumes non-full rated PA P*_{PA}* = P/2, a value of P*_{PA}* is not limited to this.

Even though such structures of UE capabilities 1 to 3 are defined, the UE cannot eventually perform full power transmission when directly using an existing precoding matrix such as described in FIG. 1. When full power transmission is not available, coverage reduction may occur, and an increase in communication throughput may be suppressed.

Thus, the inventors of the present invention came up with the idea of a control method for appropriately performing full power transmission. According to one aspect of the present disclosure, it is possible to perform UL MIMO (Multi Input Multi Output) transmission at full power, thereby allowing cell coverage similar to that of a single antenna to be kept. According to UL MIMO, it is possible to obtain spatial diversity gain, and thus throughput improvement can be expected. Even a UE including full rated PAs fewer than the number of transmission antennas can appropriately perform full power transmission.

Embodiments according to the present disclosure will be described in detail hereinafter with reference to the drawings. The radio communication methods according to respective embodiments may each be employed individually, or may be employed in combination.

Note that the terms "antenna" and "antenna port" in embodiments below may be interchangeably interpreted.

### (Radio Communication Method)

### <First Embodiment>

A first embodiment proposes UE capability information regarding support for a full rated PA that is more detailed than those of above-mentioned UE capabilities 1 to 3, and proposes control associated with this.

For example, a UE may transmit information for identifying a transmission antenna port that includes a full rated PA or the number of transmission antenna ports as the UE capability information to a network (e.g., a base station). The network may select, on the basis of the UE capability information that is reported from the UE, a codebook suitable for the UE.

The network may notify the UE of information regarding the codebook by using higher layer signaling or the like. The network may designate, to the UE by using a TPMI in DCI, transmission in which a transmission antenna port that includes a full rated PA is used.

The above-described UE capability information may be, for example, at least one of the following:
(1) information regarding a transmission antenna index that includes (or does not include) a full rated PA,
(2) information regarding the number of transmission antennas that include (or do not include) a full rated PA,
(3) information regarding inclusion of (or support for) one or more full rated PAs, and
(4) information regarding a capability to perform full power transmission despite nonCoherent or partialAndNonCoherent.

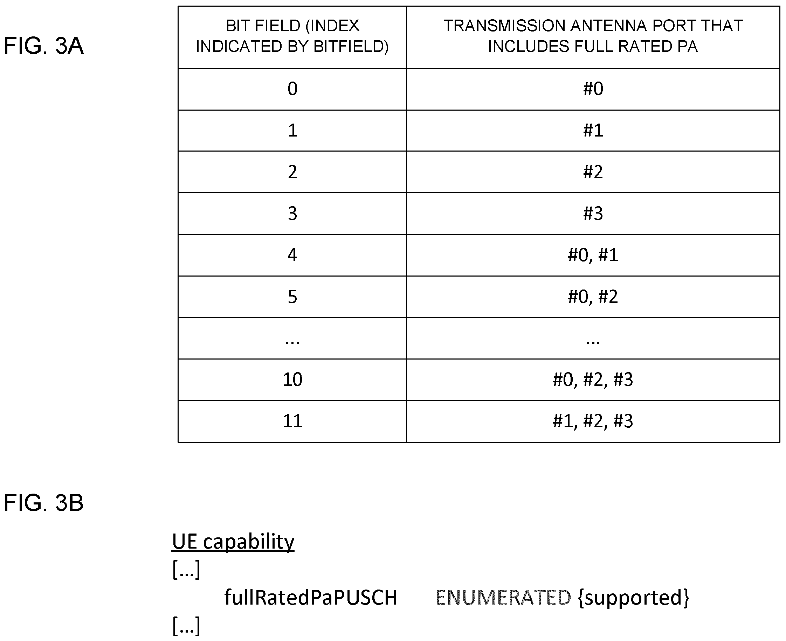

FIGS. 3A and 3B are diagrams to show an example of the UE capability information regarding support for a full rated PA in the first embodiment.

FIG. 3A corresponds to the above-described (1). A table of FIG. 3A shows an example of correspondence between a bit field to be reported and a transmission antenna index that includes a full rated PA. The UE may transmit the bit field in the table of FIG. 3A as the UE capability information regarding the support for a full rated PA. For example, the UE that includes antennas with antenna indices #0 and #1 as a transmission antenna including a full rated PA may transmit the UE capability information that is 5 as a value of the bit field.

FIG. 3B corresponds to the above-described (3). FIG. 3B shows an example of the UE capability information regarding the support for a full rated PA that is described using ASN. 1 (Abstract Syntax Notation One) notation. The present example shows that an RRC parameter "fullRatedPaPUSCH" can take a value "supported." The fullRatedPaPUSCH that is the supported may mean a capability that includes (or supports) one or more full rated PA. Note that the name of the RRC parameter is not limited to this.

The UE capability information regarding the support for a full rated PA may be transmitted by multi-stage transmission. For example, the UE may firstly transmit the UE capability of the above-described (3) or (4). The network may transmit signaling (e.g., higher layer signaling) for triggering a report of the capability of the above-described (1) to the UE that has the UE capability of the above-described (3) or (4). The UE that has received the signaling may transmit the UE capability of the above-described (1).

Note that the UE that includes only a single antenna (or cannot perform UL MIMO transmission) may not transmit the UE capability information regarding the support for a full rated PA to the network.

### [Full Power Transmission Control]

It may be assumed that when a precoding matrix designated by a TPMI included in DCI (e.g., DCI format 0_1; the same applies hereinafter) uses a transmission antenna port including a full rated PA, the UE that has reported the above-described UE capability information performs transmission such that a total transmit power of ports takes a UE maximum transmit power P (in other words, at full power).

In this case, the UE may control power of each antenna port by using a matrix that is the designated precoding matrix in which a coefficient part (e.g., in FIG.1, "1/2" multiplied to a matrix part that is constituted with elements whose absolute values are 1) is modified to (substituted for) a certain value. Note that letting this coefficient part in Rel-15 NR be α_{*Rel*15}, and letting the above-described certain value be α_{*Rel*16}, it is preferable that α_{*Rel*15} < α_{*Rel*16} ≤ 1. The coefficient part may be referred to as a scaling value.

In other words, the UE may apply precoding to UL transmission using the above-described modified precoding matrix such that a total transmit power of antenna ports that is designated by the precoding matrix indicated by the TPMI matches with (or reaches) the maximum transmit power P of the UE. Note that in the present disclosure, a modification may be interpreted as an update, computation, derivation, substitution, and the like.

The above-described modified precoding matrix may be interpreted as a matrix that differs from the above-described precoding matrix. The UE that has reported the above-described UE capability information may determine, depending on a transmission antenna port that includes a full rated PA or the number of transmission antenna ports, a reference table (table for correspondence between a precoding matrix and a TPMI). The UE may select, on the basis of the determined table, a precoding matrix that differs from the above-described precoding matrix.

For example, when the TPMI designates 1/2[1 0 1 0]*^{T}* (T denotes a transposed matrix; the same applies hereinafter) as a codebook (precoding matrix) for the UE that includes the structure of UE capability 3 in FIG. 2, the precoding matrix uses the transmission antenna port that includes a full rated PA, and thus, the UE may control so as to perform UL transmission by using 1/(√2)[1 0 1 0]*^{T}* (in this case, α_{*Rel*16} = 1/(√2)).

Although a total transmit power of ports is P * (1/2)² * 2 = P/2 when 1/2[1 0 1 0]*^{T}* is used, the total transmit power of ports takes P * ((1/(√2))² * 2 = P when 1/(√2)[1 0 1 0]*^{T}* is used, thereby allowing the UE to perform the UL transmission at full power.

For example, when the TPMI designates 1/2[1 0 0 0]*^{T}* as the codebook (precoding matrix) for the UE that includes the structure of UE capability 3 in FIG. 2, the UE may also control so as to perform UL transmission by using 1[1 0 0 0]*^{T}* (in this case, α_{*Rel*16} = 1).

Although a total transmit power of ports is P * (1/2)² = P/4 when 1/2[1 0 0 0]*^{T}* is used, the total transmit power of ports takes P * 1² = P when 1[1 0 0 0]*^{T}* is used, thereby allowing the UE to perform the UL transmission at full power.

It may be assumed that when a precoding matrix that is designated by the TPMI included in the DCI never uses a transmission antenna port that includes a full rated PA, the UE performs transmission such that a transmit power of an antenna port used by the precoding matrix takes at PA maximum output power P*_{PA}* at most or a certain power.

Here, the certain power may be notified to the UE by using any one or combinations of higher layer signaling (e.g., RRC signaling) and physical layer signaling (e.g., DCI (DCI that includes the TPMI and the like)), or may be power (α_{*Rel*15}) that complies with an existing precoding matrix of Rel-15 NR. The certain power may be referred to as power that can be transmitted by a non-full rated PA.

For example, when the TPMI designates 1/2[0 1 0 0]*^{T}* (T denotes a transposed matrix; the same applies hereinafter) as a codebook (precoding matrix) for the UE that includes the structure of UE capability 3 in FIG. 2, the precoding matrix does not use the transmission antenna port that includes a full rated PA, and thus, the UE may control so as to perform UL transmission by using 1/ (√2) [0 1 0 0]*^{T}*.

Although a total transmit power of ports is P * (1/2)² = P/4 when 1/2[0 1 0 0]*^{T}* is used, the total transmit power of ports takes P * ((1/(√2))² = P/2 when 1/(√2)[0 1 0 0]*^{T}* is used, thereby allowing the UE to perform the UL transmission at antenna port #1 by using maximum transmit power P*_{PA}* of a non-full rated PA = P/2.

For example, when the TPMI designates 1/2[0 0 0 1]*^{T}* as the codebook (precoding matrix) for the UE that includes the structure of UE capability 3 in FIG. 2, the UE may also control so as to perform UL transmission by using 1/(√2)[0 0 0 1]*^{T}*.

Although a total transmit power of ports is P * (1/2)² = P/4 when 1/2[0 0 0 1]*^{T}* is used, the total transmit power of ports takes P * ((1/(√2))² = P/2 when 1/(√2)[0 0 0 1]*^{T}* is used, thereby allowing the UE to perform the UL transmission at antenna port #3 by using the maximum transmit power P*_{PA}* of the non-full rated PA = P/2.

Note that the UE may transmit information (e.g., a value of P*_{PA}*) regarding the PA maximum output power P*_{PA}* of the non-full rated PA as, for example, the UE capability information, to the network.

According to the first embodiment described above, it is possible to appropriately perform full power transmission.

### <Second Embodiment>

A second embodiment proposes UE capability information regarding support for antenna switching for full power transmission, and proposes control associated with this.

For example, a UE may transmit information regarding the support for antenna switching for full power transmission as the UE capability information to a network (e.g., a base station). The information may be indicated by information by which an RRC parameter, such as the above-mentioned "fullRatedPaPUSCH," can take a value "supported."

The UE that supports antenna switching for full power transmission may be assumed to include a transmission antenna port including one or more full rated PAs.

Note that the UE that includes only a single antenna (or cannot perform UL MIMO transmission) may not transmit the UE capability information regarding the support for antenna switching for full power transmission to the network.

### [Full Power Transmission Control]

It may be assumed that when a precoding matrix designated by a TPMI included in DCI uses a transmission antenna port that includes a non-full rated PA (or does not include a full rated PA), the UE that has reported the above-described UE capability information performs transmission such that a total transmit power of ports takes a UE maximum transmit power P (in other words, at full power) by switching a full rated PA to the antenna port.

Note that in addition to the PA switching, the UE may control power of each antenna port by using a matrix that is the designated precoding matrix in which a coefficient part (e.g., in FIG.1, "1/2" multiplied to a matrix part that is constituted with elements whose absolute values are 1) is modified to (substituted for) a certain value (the above-mentioned α_{*Rel*16}).

The above-described modified precoding matrix may be interpreted as a matrix that differs from the above-described precoding matrix. The UE that has reported the above-described UE capability information may determine, depending on at least one of the presence or absence of support for antenna switching for full power transmission, a transmission antenna port that includes a full rated PA, and the number of transmission antenna ports, a reference table (table for correspondence between a precoding matrix and a TPMI). The UE may select, on the basis of the determined table, a precoding matrix that differs from the above-described precoding matrix.

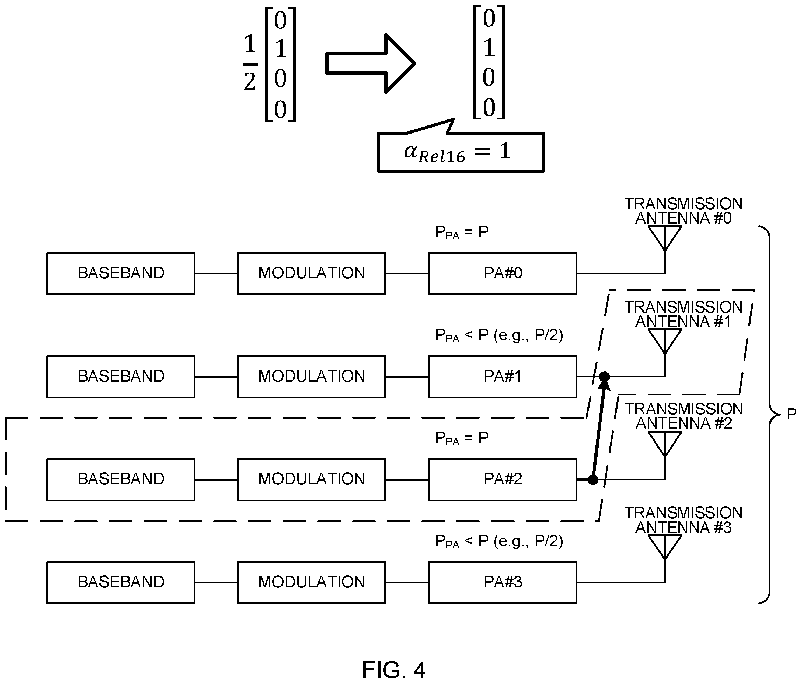

FIG. 4 is a diagram to show an example of PA switching in the second embodiment. The example assumes the UE that includes the structure of UE capability 3 in FIG. 2, and the lower part of FIG. 4 shows a transmission processing section of the UE including a section of baseband, modulation, and the like.

It is assumed that codebook-based transmission (an RRC parameter txConfig = 'codebook') is configured for the UE, and non-coherent (an RRC parameter codebookSubset = 'nonCoherent') is configured for a codebook subset. A case where the TPMI in DCI format 0_1 designates 1/2[0 1 0 0]*^{T}* as a codebook (precoding matrix) for the UE will be described.

In this case, the UE identifies the TPMI and the number of layers on the basis of the DCI, and grasps that designated antenna port #1 is not an antenna port with a full rated PA. The UE performs antenna switching so as to perform transmission at antenna port #1 by using PA #0 or #2 that is a full rated PA.

In the example of FIG. 4, PA #2 adjusts power of a signal that has passed through a baseband section, a modulation section, and the like that are originally to be connected to transmission antenna port #2, and the signal is transmitted via switched antenna port #1.

In this case, the UE may control so as to perform UL transmission using 1[0 1 0 0]*^{T}* (in this case, α_{*Rel*16} = 1) in place of designated 1/2[0 1 0 0]*^{T}*. Although a total transmit power of ports is P * (1/2)² = P/4 when 1/2[0 1 0 0]*^{T}* is used, the total transmit power of ports takes P * 1² = P when 1[0 1 0 0]*^{T}* is used, thereby allowing the UE to perform the UL transmission at full power.

### [Condition of Antenna Switching]

Even when a precoding matrix that is designated by a TPMI included in DCI uses a transmission antenna port that includes a non-full rated PA, when UL transmission to be scheduled meets a certain condition, the UE may control so as to perform transmission using a maximum power of the non-full rated PA or employ (e.g., comply with power that can be transmitted with a configured non-full rated PA) the above-mentioned first embodiment instead of performing the above-mentioned antenna switching.

Here, the certain condition may be, for example, required transmission being at low latency (e.g., the need to transmit within a certain absolute time or latency less than the number of symbols). The antenna switching takes a certain time, and the certain condition is for avoiding applying the switching to low latency transmission.

The certain condition may be, for example, at least one of the following:
- UL subcarrier spacing is equal to or greater than a certain value (e.g., 60 kHz. '2' when expressed by a parameter µ related to subcarrier spacing), or is equal to or less than the certain value, and
- the number of symbols of a scheduled PUSCH is equal to or less than a certain number (e.g., 7 symbols in 1 slot), or is equal to or greater than the certain number.

The UE may determine, on the basis of a time from reception of DCI until PUSCH transmission scheduled by the DCI, whether or not to perform the above-mentioned antenna switching for the PUSCH transmission. Here, the time until the PUSCH transmission may indicate a time from a last symbol that has received the DCI until a first symbol of a PUSCH triggered by the DCI.

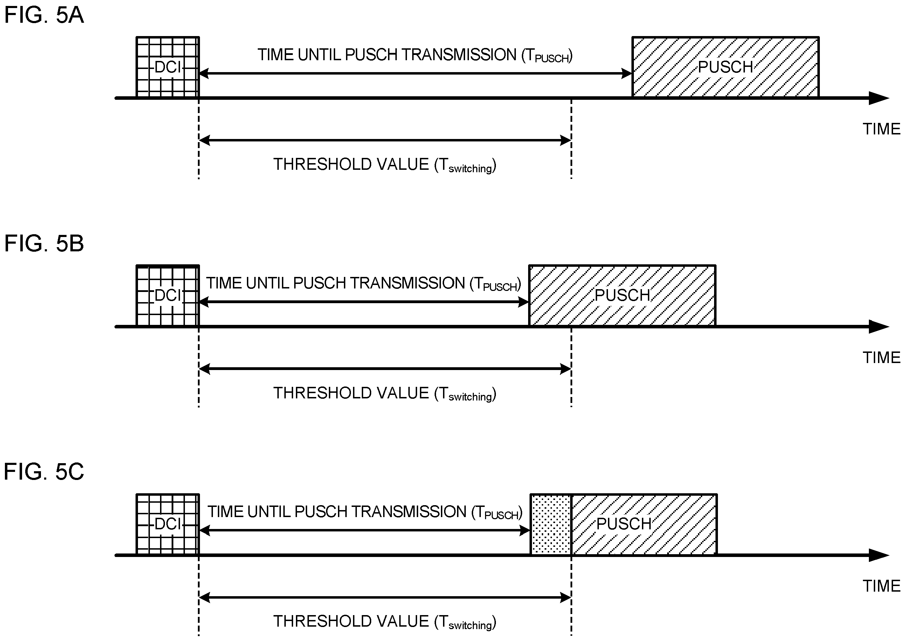

FIGS. 5A to 5C are diagrams to show an example of antenna switching control based on the time until PUSCH transmission. In the present example, a time from reception of DCI until PUSCH transmission is denoted by *T_{PUSCH},* and a threshold value that serves as a target for comparison with *T_{PUSCH}* is denoted by T*_{switching}*.

The threshold value T*_{switching}* may be configured for the UE by using higher layer signaling or the like, may be determined by a specification, or may be determined on the basis of another configuration value. For example, a threshold value (minimum guard period Y (Y = 1 or 2 symbols) between SRS resources indicated in 3GPP TS 38.214 Table 6.2.1.2-1) for antenna switching for an SRS may be used as T*_{switching}*. T*_{switching}* may take a different value for each piece of subcarrier spacing.

The UE may perform the above-mentioned antenna switching in a case (FIG. 5A) where *T_{PUSCH}* is equal to or greater than T*_{switching}*.

In a case (FIG. 5B) where *T_{PUSCH}* is less than T*_{switching}*, the UE may control so as to perform transmission using a maximum power of the non-full rated PA or employ (e.g., comply with power that can be transmitted with a configured non-full rated PA) the above-mentioned first embodiment instead of performing the above-mentioned antenna switching.

In a case (FIG. 5C) where T*_{PUSCH}* is less than T*_{switching}*, the UE may transmit a PUSCH within time from reception of DCI until a lapse of T*_{switching}* by using a (non-full rated) PA maximum power (of a PA at a designated antenna port) before switching, and may control so as to transmit the PUSCH after the time by using a (full rated) PA maximum power after switching.

In the case of FIG. 5C, the PUSCH within the time from reception of DCI until a lapse of T*_{switching}* may be assumed to be a scaling value (α_{*Rel*15} mentioned above) for the above-mentioned Rel. 15 NR, and the PUSCH after the time may be assumed to be a scaling value (α_{*Rel*16} mentioned above) that can be transmitted using the PA maximum power after switching.

Note that the UE may be assumed to perform an operation that is related to the antenna switching mentioned in the second embodiment as long as the network has triggered (e.g., has configured or specified by higher layer signaling, physical layer signaling, or the like) so as to perform full power transmission.

According to the second embodiment described above, it is possible to appropriately perform full power transmission.

### <Third Embodiment>

Although the UL transmission using an antenna port is described assuming for the PUSCH in the above-described first and second embodiments, full power transmission for at least one of another signal and channel, in addition to or in place of the PUSCH, may be controlled.

In other words, the antenna port in the above-described first and second embodiments may be an antenna port of at least one of a PUSCH (and DeModulation Reference Signal (DMRS) for a PUSCH, Phase Tracking Reference Signal (PTRS)), an uplink control channel (Physical Uplink Control Channel (PUCCH)), a random access channel (Physical Random Access Channel (PRACH)), an SRS, and the like.

Hereinafter, although an example in which full power transmission, antenna switching, and the like for an SRS as another signal are controlled will be described, an SRS in the description below may be interpreted as another signal or channel as mentioned above.

It may be assumed that when a precoding matrix that is designated by a TPMI included in DCI uses a transmission antenna port (e.g., a PUSCH antenna port) that includes a full rated PA, a UE including a UE capability that includes one or more full rated PAs less than the number of transmission antenna ports transmits a PUSCH scheduled by the DCI such that a total transmit power of ports takes a UE maximum transmit power P.

The UE may also be assumed to apply at least one of a precoding matrix applied to the PUSCH and transmit power scaling to an SRS antenna port to transmit an SRS. The SRS may be an SRS that is indicated by an SRI field included in the DCI, may be an SRS that is designated by a parameter "srs-ResourceIndicator" included in an RRC information element "ConfiguredGrantConfig" for a configured grant PUSCH, or may be a periodic SRS that is configured by higher layer signaling, a semi-persistent SRS, or the like.

The UE may also perform antenna switching for the SRS on the basis of a designated precoding matrix (or codebook). The UE that has reported "fullRatedPaPUSCH," mentioned in the second embodiment, or another UE capability information (that may be referred to as, for example, "fullRatedPaSRS" and so on) may be assumed to control full power transmission of the SRS or support antenna switching for full power transmission of the SRS.

### [Condition of Antenna Switching]

The UE may be assumed to perform antenna switching for the SRS when the antenna switching for a PUSCH as described in the second embodiment is performed. In other words, the UE may determine, on the basis of a precoding matrix (e.g., a precoding matrix for a PUSCH) that is notified from a network, whether or not to apply antenna switching for the SRS.

When the SRS is transmitted within a certain period from (e.g., in a same slot as or before a certain number of slots from) a PUSCH to which antenna switching is applied, the UE may apply antenna switching similar to that for the PUSCH to the SRS, otherwise the UE may not apply the antenna switching. The certain period may be configured by higher layer signaling, may be determined on the basis of a certain UE capability, or may be determined by a specification.

When antenna switching is applied to a latest PUSCH with reference to a reception timing of DCI that triggers a transmission timing of an SRS or the SRS, the UE may also apply antenna switching similar to that for the PUSCH to the SRS, otherwise the UE may not apply the antenna switching.

For example, when a precoding matrix designated by a TPMI included in DCI uses an antenna port for a PUSCH that includes a non-full rated PA (or does not include a full rated PA), the UE that has reported UE capability information "fullRatedPaPUSCH" regarding a PUSCH or the above-described UE capability information regarding an SRS may perform, as described in the second embodiment, antenna switching for the PUSCH, or may also perform antenna switching for an SRS.

The UE may perform antenna switching for an SRS in addition to antenna switching for a PUSCH when *T_{PUSCH}* described in FIG. 5A is equal to or greater than T*_{switching}*.

In a case (FIG. 5B) where *T_{PUSCH}* is less than T*_{switching},* the UE may control so as to transmit a PUSCH and SRS by using a maximum power of a non-full rated PA or employ (e.g., comply with power by which the PUSCH and SRS can be transmitted with a configured non-full rated PA) the above-mentioned first embodiment instead of performing antenna switching for the PUSCH and SRS.

In a case (FIG. 5C) where T*_{PUSCH}* is less than T*_{switching}*, the UE may transmit a PUSCH and SRS within time from reception of DCI until a lapse of T*_{switching}* by using a (non-full rated) PA maximum power (of a PA at a designated antenna port) before switching, and may control so as to transmit the PUSCH and SRS after the time by using a (full rated) PA maximum power after switching.

In the case of FIG. 5C, the PUSCH and SRS within the time from reception of DCI until a lapse of T*_{switching}* may be assumed to be a scaling value (α_{*Rel*15} mentioned above) for the above-mentioned Rel. 15 NR, and the PUSCH and SRS after the time may be assumed to be a scaling value (α_{*Rel*16} mentioned above) that can be transmitted using the PA maximum power after switching.

The UE may be assumed to perform, on the basis of an interval between transmissions of a plurality of SRS resources, antenna switching for at least one of these SRSs. The plurality of the SRS resources may be the same type of SRS resource, or may be a different type of SRS resource. The type mentioned here may be, for example, at least one of a periodic SRS, a semi-persistent SRS, and an aperiodic SRS.

Note that the antenna switching control for an SRS may be performed independently of the PUSCH (regardless of the PUSCH). For example, it may be determined whether the antenna switching control for an SRS based on an interval between transmissions of a plurality of SRS resources is applied regardless of a codebook applied to the PUSCH by the DCI.

For example, the UE may perform the antenna switching for an SRS when an interval between transmissions of two SRS resources is equal to or greater than a certain threshold value.

Here, a threshold value for SRS antenna switching (minimum guard period Y (Y = 1 or 2 symbols) between SRS resources indicated in 3GPP TS 38.214 Table 6.2.1.2-1) may be used as the above-described certain threshold value, or the certain threshold value may be separately configured by higher layer signaling. Note that the minimum guard period Y may correspond to a period that is a period between two SRS resources in an SRS resource set (an SRS resource set for which an RRC parameter "usage" = "antennaSwitching") in which SRS usage is configured as antenna switching and is a period in which transmission of another signal is not allowed.

When the interval between the transmissions of two SRS resources is less than the certain threshold value, the UE may control so as to transmit an SRS by using a maximum power of a non-full rated PA or employ (e.g., comply with power by which the SRS can be transmitted with a configured non-full rated PA) the above-mentioned first embodiment instead of performing antenna switching for the SRS.

When the interval between the transmissions of two SRS resources is less than the certain threshold value, the UE may shift a transmission timing of the second SRS resource to a timing separated from a transmission timing of the first SRS resource by the certain threshold value or more, and may apply antenna switching for an SRS to transmit the SRS. In this case, for example, after transmitting the first SRS resource, the UE may perform the SRS antenna switching, and may transmit the second SRS. A shift amount in the SRS resource may be determined by the UE on the basis of a configuration of higher layer signaling, or may be defined by a specification.

Note that the UE may be assumed to perform antenna switching for a PUSCH when the antenna switching for an SRS described in the third embodiment is performed. In other words, the UE may determine, on the basis of antenna switching for an SRS within a certain period (e.g., before a certain number of slots) from a PUSCH or a latest SRS, whether or not to apply the antenna switching for the PUSCH.

According to the third embodiment described above, it is also possible to appropriately perform full power transmission of a signal or channel other than a PUSCH. For example, the UE that includes above-mentioned UE capability 3 can perform full power transmission for an SRS on the basis of a notified codebook (precoding matrix).

### <Others>

Note that when transmitting UE capability information as mentioned in the above-described first and second embodiments, the UE may not or may transmit capability information regarding UE capabilities 1 to 3 mentioned in association with FIG. 2.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

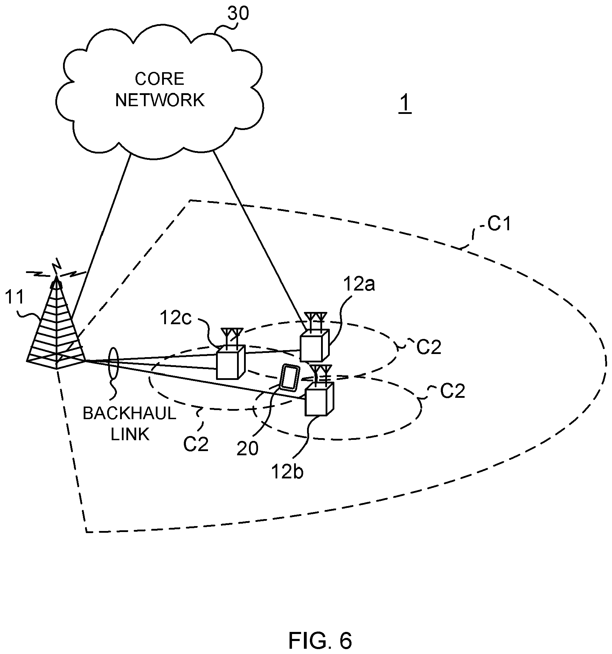

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

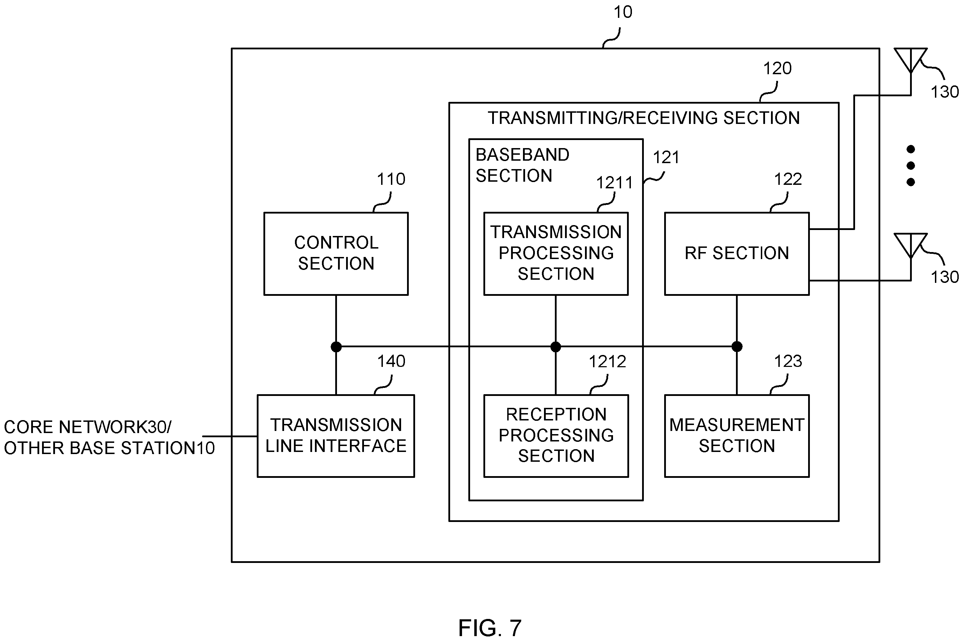

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may receive, from the user terminal 20, UE capability information regarding support for a full rated PA, UE capability information regarding support for antenna switching for full power transmission, and the like. The control section 110 may control so as to generate DCI for causing the UE that has reported these pieces of capability information to perform full power transmission.

### (User Terminal)

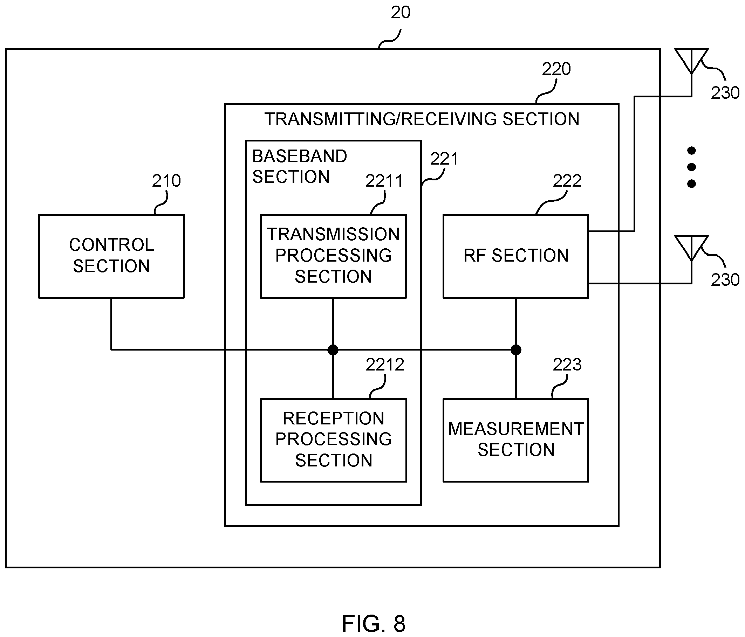

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may determine, on the basis of downlink control information (DCI), a precoding matrix applied to uplink transmission (e.g., a PUSCH).

The transmitting/receiving section 220 may apply, using a matrix that is obtained by modifying the precoding matrix, precoding to the uplink transmission such that a total transmit power of antenna ports designated by the precoding matrix matches with a maximum transmit power of the user terminal, and may perform the uplink transmission.

When transmitting information for identifying a transmission antenna port that includes a full rated power amplifier or the number of transmission antenna ports, the transmitting/receiving section 220 may apply precoding to the uplink transmission by using the modified matrix.

When transmitting information regarding support for antenna switching for full power transmission, the transmitting/receiving section 220 may apply precoding to the uplink transmission using the modified matrix.

When the precoding matrix uses a transmission antenna port that includes a non-full rated power amplifier, the transmitting/receiving section 220 may switch a full rated power amplifier to the antenna port.

The transmitting/receiving section 220 may determine, on the basis of a time from reception of the downlink control information until the uplink transmission scheduled by the downlink control information, whether or not to perform antenna switching for the uplink transmission.

The transmitting/receiving section 220 (that may include the control section 210) may judge, on the basis of a precoding matrix for a PUSCH, whether or not (whether it is possible) to apply antenna switching for a signal or channel (e.g., an SRS) other than the PUSCH, and may transmit the signal or channel other than the PUSCH.

When antenna switching is applied to the PUSCH, the transmitting/receiving section 220 may apply antenna switching to the signal or channel other than the PUSCH.

The transmitting/receiving section 220 may judge, on the basis of an interval between transmissions of a plurality of SRS resources, whether or not to apply antenna switching for at least one of these SRSs.

When the interval between the transmissions of the plurality of SRS resource is less than a certain threshold value (e.g., Y mentioned above), the transmitting/receiving section 220 may shift (or offset) a transmission timing of one (e.g., later one in time) of the plurality of the SRS resources to a timing separated from transmission timing of another (e.g., earlier one in time) of the plurality of the SRS resources by the certain threshold value or more, and applies the antenna switching to the SRS.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

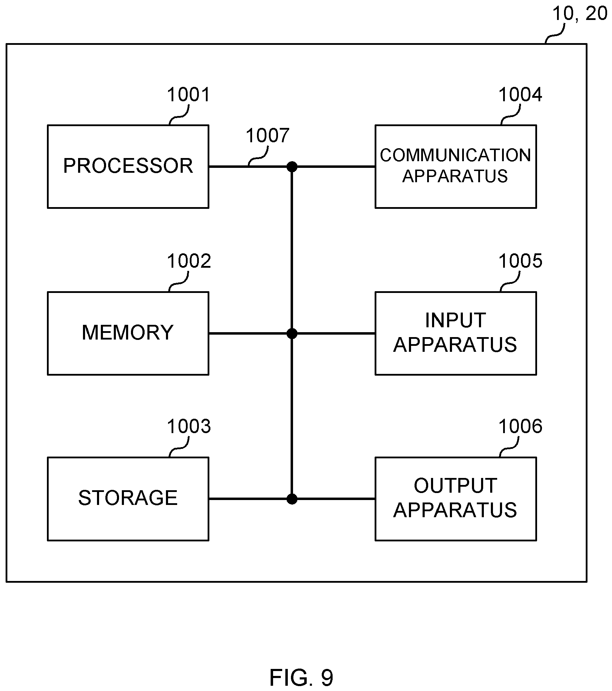

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a control section that determines, on the basis of downlink control information, a precoding matrix applied to a physical uplink shared channel (PUSCH); and
a transmitting section that judges, on the basis of the precoding matrix, whether or not to apply antenna switching for a signal or a channel other than the PUSCH, and transmits the signal or the channel other than the PUSCH.

2. The user terminal according to claim 1, wherein
the transmitting section applies, when the antenna switching is applied to the PUSCH, the antenna switching to the signal or the channel other than the PUSCH.

3. The user terminal according to claim 1 or 2, wherein
the signal or the channel other than the PUSCH is a sounding reference signal (SRS).

4. The user terminal according to claim 3, wherein
the transmitting section determines, on the basis of an interval between transmissions of a plurality of SRS resources, whether or not to apply the antenna switching for at least one of these SRSs.

5. The user terminal according to claim 4, wherein
the transmitting section shifts, when the interval between the transmissions of the plurality of SRS resources is less than a certain threshold value, a transmission timing of one of the plurality of the SRS resources to a timing separated from transmission timing of another of the plurality of the SRS resources by the certain threshold value or more, and applies the antenna switching to the SRS.

6. A radio communication method for a user terminal comprising:
determining, on the basis of downlink control information, a precoding matrix applied to a physical uplink shared channel (PUSCH); and
judging, on the basis of the precoding matrix, whether or not to apply antenna switching for a signal or a channel other than the PUSCH, and transmitting the signal or the channel other than the PUSCH.
